# EUROPÄISCHE PATENTSCHRIFT

(11) **EP 1 386 720 B1**
(45) Veröffentlichungstag und Bekanntmachung des Hinweises auf die Patenterteilung: **26.01.2011**
(21) Anmeldenummer: 03014887.8
(22) Anmeldetag: 01.07.2003
(51) Int. Cl.: B29C 63/04, C09J 5/00

(54) **Verfahren zum Beschichten von plattenförmigen Werkstücken mit einer Dekorfolie**
Method for coating plate-like workpieces with a decorative foil
Procédé pour recouvrir des plaques avec une feuille décorative

(30) Priorität: 31.07.2002 DE 10235019
(43) Veröffentlichungstag der Anmeldung: 04.02.2004
(73) Patentinhaber: Homag Holzbearbeitungssysteme AG, 72296 Schopfloch (DE)
(72) Erfinder: Götz, Frieder, 77761 Schiltach (DE); Schmid, Johannes, 72181 Sterzach-Wachendorf (DE); Kalmbach, Kurt, 72275 Alpirsbach (DE)
(74) Vertreter: HOFFMANN EITLE

(56) Entgegenhaltungen:
- EP-A- 0 733 450
- DE-A- 2 731 657
- DE-A- 3 131 183
- DE-A- 4 311 830
- US-A1- 2002 005 229

## Beschreibung

Die Erfindung bezieht sich auf ein Verfahren der im Oberbegriff des Patentanspruchs 1 näher angegebenen Art.

Bei einem solchen Verfahren, wie es derzeit zum Ummanteln von plattenförmigen Werkstücken im Durchlauf praktiziert wird, wird für die Verklebung der Dekorfolie sowohl an der Werkstück-Breitseite als auch an der Werkstück-Schmalseite ein Schmelzkleber verwendet. In der Regel wird der Schmelzkleber auf die Rückseite der Dekorfolie aufgetragen, die anschließend mittels beheizter Walzen auf die Breitseite des Werkstücks aufkaschiert wird. Die in Durchlaufrichtung liegende Randzone der Dekorfolie wird zugleich wie die übrige zu verklebende Fläche der Dekorfolie mit dem Schmelzkleber versehen, gegebenenfalls kann hier im nachhinein noch ein zusätzlicher Schmelzkleberauftrag erfolgen, sofern dies wegen einer Verfüllung der angeschnittenen Schmalseiten der Werkstücke erforderlich ist. Denn bei den Werkstücken handelt es sich um Platten aus Holz oder holzartigem Werkstoff, wie Spanplattenmaterial, welches im Innern eine gröbere Spanstruktur als im Bereich der außenliegenden Breitseiten aufweist. Die Verwendung eines Schmelzklebers im sogenannten Heiß-Kalt-Kleber-Verfahren bietet den Vorteil, schnelle Vorschubgeschwindigkeiten beim Beschichten der plattenförmigen Werkstücke vorsehen zu können, zudem tritt mit der Erkaltung des Schmelzklebers die Klebwirkung sofort ein. So wird auch bei profilierten Schmalseiten der Werkstücke eine sichere Verklebung erreicht. Nachteilig ist der hohe Schmelzkleberbedarf für die Flächenverklebung an den Werkstück-Breitseiten, hinzu kommt, daß Schmelzkleber sehr viel teurer als andere Klebstoffsysteme sind.

Ebenso aufwendig ist die Verwendung von Weißleimsystemen. Vor allem sind damit hohe Anlagekosten verbunden, weil eine Vielzahl von Wärmequellen vorgesehen werden muß, damit der Klebstoff eine gute Verklebung hat. Außerdem benötigt der Weißleim eine genügend lange Abkühlstrecke, um seine Klebeigenschaften zu erreichen. Dadurch liegen die Produktionsgeschwindigkeiten wesentlich niedriger als bei den Heiß-Kalt-Systemen, auch ist die Oberflächengüte des Dekors auf der Fläche geringer. Insbesondere bei profilierten Werkstück-Schmalseiten besteht das Problem, dort noch zusätzlich einen Schmelzklebstoff als Füllmaterial auftragen zu müssen.

Weiter ist für die Beschichtung von plattenförmigen Werkstücken der in Rede stehenden Art das Flächenkaschieren mittels eines Zweikomponentenklebers, insbesondere eines Harnstoffklebers, bekannt. Obwohl hier die beiden Komponenten des Klebers in geeigneter Weise aufgetragen werden müssen, um miteinander reagieren zu können, ist sowohl hinsichtlich des Volumens des pro Flächeneinheit benötigten Kleberauftrags als auch der Aufwand für die betreffende Anlage zur Beschichtung im Durchlaufverfahren geringer. Ein Nachteil liegt darin, mit einer relativ hohen Prozeßtemperatur und sehr hohen Preßkräften arbeiten zu müssen, die auf profilierte Werkstück-Schmalseiten nicht aufgebracht werden können. Außerdem kann man die Auftragsmengen der beiden Komponenten des Zweikomponentenklebers an den Werkstück-Schmalseiten, insbesondere, wenn diese profiliert sind, nicht in der exakten Relation dosieren. Deshalb muß im Falle der Schmalseitenbeschichtung die Dekorfolie in einem separaten Arbeitsgang mit einem Kleber versehen und an die Werkstück-Schmalseiten angefahren werden, wobei hier zur Verklebung entweder Schmelzkleber- oder Weißleimsysteme verwendet werden.

Das Dokument DE 43 11 830 A1 beschreibt einige Verfahren zum Ummanteln von Plattenkanten mit Beschichtungswerkstoffen, so auch die Ummantelung mittels Folien unter Einsatz von Schmelzklebern. Weiter ist ein Verfahren zur Kantenummantelung unter Verwendung von Dispersionsklebstoffen erwähnt, zu denen zusätzlich ein Schmelzkleber als Montagehilfe verwendet wird. Hauptsächlich geht es in dem zitierten Dokument um eine Kantenbeschichtung im Postforming-Verfahren, bei dem eine dekorative Schichtstoffplatte zunächst mit der Breitseite einer Trägerplatte verklebt wird, hiernach werden die überstehenden Ränder der Schichtstoffplatte nachverformt und an die Platten-Schmalseiten angeschmiegt, sowie daran verklebt.

Aus dem Dokument DE 27 31 657 A1 ist ein Verfahren zum Kaschieren von plattenförmigen Werkstücken bekannt, bei dem im Durchlauf auf die Werkstücke eine Materialbahn aufgebracht wird, die bis auf die seitlichen, in Durchlaufrichtung liegenden Schmalflächenseiten der Werkstücke reicht. Die Verklebung der Materialbahn erfolgt ausschließlich mittels eines Zweikomponenten-Kunstharzklebers, der entweder auf das Werkstück oder auf die Materialbahn aufgetragen wird und je nach den gewünschten Klebeigenschaften einen Beschleuniger oder einen Härter enthält.

Der Erfindung liegt deshalb die Aufgabe zugrunde, ein Verfahren der eingangs genannten Art zu schaffen, bei dem in einem einzigen Werkstückdurchlauf die Flächenkaschierung an den betreffenden Werkstück-Breitseiten und die Verklebung der Randzonen der Dekorfolie an den betreffenden Werkstück-Schmalseiten mit dem jeweils günstigsten Klebersystem durchgeführt wird.

Diese Aufgabe wird durch die im Anspruch 1 angegebenen Verfahrensmerkmale gelöst.

Für die Erfindung ist wesentlich, für die Flächenkaschierung den Zweikomponentenkleber, insbesondere einen Harnstoffkleber, einzusetzen, der bei einem geringen Auftragsvolumen eine hohe Haftung der Dekorfolie auf den Werkstück-Breitseiten sichert. Für die Verklebung der Dekorfolie an den Werkstück-Schmalseiten hingegen wird ein Schmelzklebersystem eingesetzt, welches bei gleichzeitiger oder ergänzender Füllung der Poren an den Werkstück-Schmalseiten eine sichere Verklebung sowie eine hohe Oberflächengüte der Dekorfolie ermöglicht. So werden hier in einem Arbeitsgang zwei unterschiedliche Klebersysteme eingesetzt, von denen das hinsichtlich des Klebervolumens aufwendigere System den höheren spezifischen Anforderungen für die Schmalseitenverklebung gerecht wird, zu denen das sichere Verkleben auf porösen Flächen mit unterschiedlichen Profilformen sowie Temperatur- und Feuchtigkeitsbeständigkeit zählen. Ein besonderes Merkmal der Erfindung liegt darin, bei dem einzigen Werkstückdurchlauf die unterschiedlichen Klebstoffe vor dem Kaschieren auf die betreffenden Flächen der Werkstücke und/oder der Dekorfolie aufzutragen.

Vorteilhafte Ausgestaltungsmerkmale des erfindungsgemäßen Verfahrens ergeben sich aus den Unteransprüchen.

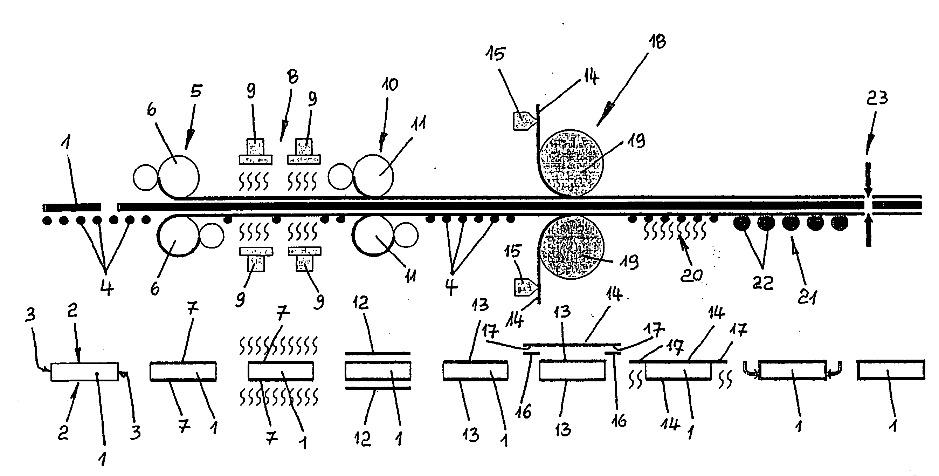

Die Erfindung wird nachfolgend anhand der Zeichnung noch näher erläutert. Die Zeichnung zeigt im oberen Teil eine schematische Seitansicht einer Anlage zur Beschichtung plattenförmiger Werkstücke und im unteren Teil in ebenfalls schematischer Darstellung den Werkstückquerschnitt an den einzelnen, jeweils senkrecht darüber wiedergegebenen Stationen der Anlage.

Im einzelnen erkennt man in der Zeichnung die in die Anlage einlaufenden plattenförmigen Werkstücke 1, die vornehmlich aus einem Spanplattenmaterial bestehen und zur Verwendung insbesondere im Möbelbau und im Innenausbau bestimmt sind. Die plattenförmigen Werkstücke 1 haben ein quadratisches oder rechteckiges Format, und die großflächigen Seiten der Werkstücke 1 werden im nachhinein als Werkstück-Breitseiten 2 bezeichnet. Die in Durchlaufrichtung der Werkstücke 1 liegenden Seiten der Werkstücke 1, die gegenüber den Werkstück-Breitseiten 2 eine wesentlich geringere Fläche aufweisen, sind im nachhinein als Werkstück-Schmalseiten 3 bezeichnet.

Die Werkstücke 1 werden flachliegend sowie in dichter Folge beispielsweise mit ihren Stirnseiten aneinanderstoßend auf einer Transportvorrichtung 4 im kontinuierlichen Durchlauf durch die Anlage hindurchbefördert. An den Stellen, an denen an den Werkstücken 1 eine Bearbeitung an der aufliegenden Breitseite 2 vorgenommen werden muß, ist entsprechend die Transportvorrichtung 4 unterbrochen, hier werden die Werkstücke 1 von stationseigenen Komponenten weiterbefördert.

Als erstes durchlaufen die Werkstücke 1 eine Auftragsstation 5 mit Auftragswalzen 6, die einen Auftrag 7 eines Härters eines Zweikomponentenklebers auf die Werkstück-Breitseiten 2 aufbringen. Mit dem Härterauftrag 7 durchlaufen die Werkstücke 1 eine Heizzone 8. Danach passieren die Werkstücke 1 eine weitere Auftragsstation 10 mit Auftragswalzen 11 für die Harzkomponente 12 des Zweikomponentenklebers.

Mit dem nunmehr an beiden Breitseiten 2 der Werkstücke 1 aufgetragenen Zweikomponentenkleber 13 laufen die Werkstücke 1 in eine Beschichtungsstation 18 ein, der eine Dekorfolie 14 endlos zugeführt wird, mit der die Werkstücke 1 an ihren mit dem Zweikomponentenkleber 13 versehenen Breitseiten 2 kaschiert werden. Die Dekorfolie 14, welche auf die aufliegende Breitseite 2 der Werkstücke 1 aufgetragen wird, hat eine Breite, die der Breite der Werkstücke 1 entspricht. Die Dekorfolie 14, die auf die obenliegende Breitseite 2 der Werkstücke 1 aufgeklebt wird, ist dagegen um zwei Randbereiche 17 breiter, wobei jeder dieser Randbereiche 17 für sich eine Breite hat, welche der der Dicke der Werkstücke 1 gleichen Höhe der Werkstück-Schmalseiten 3 entspricht.

Bevor die Dekorfolien 14 auf die beiden Werkstück-Breitseiten 2 aufgefahren werden, erhält diejenige Dekorfolie 14, welche die Überstandsbereiche 17 aufweist, an deren Unterseite einen Schmelzkleberauftrag 16. Dafür sind Düsen 15 vorgesehen, die den verflüssigten, heißen Schmelzkleber auf die Unterseiten der Randbereiche 17 der Dekorfolie 14 aufsprühen.

An der Beschichtungsstation 18 verpressen Druckwalzen 19 die beiden Dekorfolien 14 mit den Werkstück-Breitseiten 2. Mittels des noch heißen Zweikomponentenklebers 13 wird hier der nicht beschichtete, mittlere Bereich der Dekorfolie 14 im Flächenkaschierverfahren mit den Werkstück-Breitseiten unter hohem Druck verklebt. Hiernach stehen die Randzonen 17 der Dekorfolie 14, die auf die obenliegende Breitseite 2 der Werkstücke 1 aufgetragen ist, zunächst noch zu beiden Seiten über die Werkstücke 1 über. Der an der Unterseite dieser Randzonen 17 noch freiliegende Schmelzkleberauftrag 16 wird in einer weiteren Heizzone 20 mittels Infrarotstrahlern oder Heißluft aktiviert, um in einer nachfolgenden Ummantelungsstation 21 die Randzonen 17 der Dekorfolie 14 mittels Formrollen oder -schuhen 22 an die Werkstück-Schmalseiten 3 anzufahren. Hier erfolgt demgemäß die Verklebung der Randzonen 17 der Dekorfolie 14 mit den Werkstück-Schmalseiten 3 mittels des Schmelzklebers.

Da die einzelnen Werkstücke mit ihren Stirnseiten nahe benachbart oder aneinanderstoßend durch die Anlage hindurchbefördert werden, hängen sie zunächst noch über die ober- und unterseitig aufgetragenen Dekorfolien 14 zusammen. Deshalb erfolgt eine Trennung der Werkstücke 1 an einer weiteren Station 23.

## Patentansprüche

1. Verfahren zum Beschichten von plattenförmigen Werkstücken (1) aus Holz und/oder holzartigen Werkstoffen, insbesondere aus Spanplattenmaterial, mit einer Dekorfolie (14) in einem einzigen Arbeitsgang im maschinellen Durchlauf, wobei die Dekorfolie (14) auf zumindest eine der Breitseiten (2) und auf zumindest eine in der Durchlaufrichtung liegende Schmalseite (3) der Werkstücke (1) unter Verwendung von wenigstens zwei Klebstoffen aufgeklebt und für die Verklebung zwischen den Werkstück-Schmalseiten (3) und der Dekorfolie (14) ein Schmelzkleber verwendet wird,
**dadurch gekennzeichnet,**
**dass** der Schmelzkleber vor dem Anfahren der Dekorfolie (14) an die Werkstücke (1) entweder auf die mit den Werkstück-Schmalseiten (3) zu verklebende Fläche der Dekorfolie (14) oder auf die mit der Dekorfolie (14) zu beklebenden Werkstück-Schmalseiten (3) aufgetragen wird und für die Verklebung der Dekorfolie (14) mit den Werkstück-Breitseiten (2) ein Zweikomponentenkleber (13) verwendet wird und dass ebenfalls beide Komponenten dieses Klebers vor dem Anfahren der Dekorfolie (14) an die Werkstücke (1) entweder auf die mit den Werkstück-Breitseiten (2) zu verklebende Fläche der Dekorfolie (14) oder auf die mit der Dekorfolie zu beklebenden Werkstück-Breitseiten (3) aufgetragen werden, wonach im selben Durchlauf die Dekorfolie in ihrer Gesamtheit an die Werkstück-Breitseiten (2) sowie an die Werkstück-Schmalseiten (3) angefahren und daran angepresst wird.

2. Verfahren nach Anspruch 1,
**dadurch gekennzeichnet,**
**daß** als erstes die Härterkomponente und anschließend die Harzkomponente des Zweikomponentenklebers auf die eine der beiden miteinander zu verklebenden Flächen der Dekorfolie und den Werkstück-Breitseiten aufgetragen wird.

3. Verfahren nach Anspruch 2,
**dadurch gekennzeichnet,**
**daß** die Komponenten des Zweikomponentenklebers auf die Werkstück-Beitseiten aufgebracht werden.

4. Verfahren nach einem der Ansprüche 1 - 3,
**dadurch gekennzeichnet,**
**daß** als Zweikomponentenkleber ein Harnstoffkleber verwendet wird.

5. Verfahren nach Anspruch 3 oder 4,
**dadurch gekennzeichnet,**
**daß** nach dem Aufbringen der Härterkomponente und vor dem Aufbringender Harzkomponente die Werkstücke beheizt werden.

6. Verfahren nach einem der Ansprüche 1 - 5,
**dadurch gekennzeichnet,**
**daß** der Schmelzkleber auf zumindest eine der beiden in der Durchlaufrichtung sich erstreckenden Randzonen der Dekorfolie heiß aufgetragen wird.

7. Verfahren nach einem der Ansprüche 3 - 6,
**dadurch gekennzeichnet,**
**daß** die Dekorfolie mit ihrem unbeschichteten Bereich neben der beschichteten Randzone mit Preßdruck an die Werkstück-Breitseiten angepreßt wird, wobei die beschichtete Randzone der Dekorfolie noch von der betreffenden Werkstück-Schmalseiten abstehend belassen wird.

8. Verfahren nach Anspruch 7,
**dadurch gekennzeichnet,**
**daß** in einem letzten Schritt die beschichtete Randzone der Dekorfolie an die betreffenden Werkstück-Schmalseiten angefahren wird.

9. Verfahren nach Anspruch 8,
**dadurch gekennzeichnet,**
**daß** der auf die Randzone der Dekorfolie aufgetragene Schmelzkleber unmittelbar vor dem Andrücken dieser Randzone an die Werkstück-Schmalseiten mittels Wärmeeinwirkung aktiviert wird.

## Claims

1. Method for coating board-like workpieces (1) made of wood and/or wood-like materials, in particular chipboard material, with a decorative film (14) in a single operation while passing through the machine, wherein the decorative film (14) is adhered to at least one of the faces (2) of the workpieces (1) and to at least one edge (3) lying in the direction of through-travel, using at least two adhesives, and a hot-melt adhesive is used for adhesion between the workpiece edges (3) and the decorative film (14), **characterised in that** the hot-melt adhesive is applied, before the decorative film (14) is moved up to the workpieces (1), either to the surface of the decorative film (14) to be adhered to the workpiece edges (3) or to the workpiece edges (3) to which the decorative film (14) is to be adhered, and a two-component glue (13) is used for adhesion of the decorative film (14) to the workpiece faces (2), and **in that** likewise both components of this glue are applied, before the decorative film (14) is moved up to the workpieces (1), either to the surface of the decorative film (14) to be adhered to the workpiece faces (2) or to the workpiece faces (3) to which the decorative film is to be adhered, whereupon in the same cycle through the machine the decorative film in its entirety is moved up to the workpiece faces (2) as well as to the workpiece edges (3) and pressed against them.

2. Method according to claim 1, **characterised in that** first the hardener component and then the resin component of the two-component glue is applied to one of the two out of the surfaces of the decorative film and the workpiece faces to be adhered to each other.

3. Method according to claim 2, **characterised in that** the components of the two-component glue are applied to the workpiece faces.

4. Method according to any of claims 1 - 3, **characterised in that** a urea-formaldehyde adhesive is used as the two-component glue.

5. Method according to claim 3 or 4, **characterised in that**, after applying the hardener component and before applying the resin component, the workpieces are heated.

6. Method according to any of claims 1 - 5, **characterised in that** the hot-melt adhesive is applied hot to at least one of the marginal zones of the decorative film extending in the direction of through-travel.

7. Method according to any of claims 3 - 6, **characterised in that** the decorative film with its uncoated region adjacent to the coated marginal zone is pressed with bonding pressure against the workpiece faces, wherein the coated marginal zone of the decorative film is left still projecting from the workpiece edges concerned.

8. Method according to claim 7, **characterised in that** in a last step the coated marginal zone of the decorative film is moved up to the workpiece edges concerned.

9. Method according to claim 8, **characterised in that** the hot-melt adhesive applied to the marginal zone of the decorative film is activated by the action of heat immediately before pressing this marginal zone against the workpiece edges.

## Revendications

1. Procédé pour recouvrir d'une couche des pièces d'oeuvre (1) se présentant sous forme de plaques, composées de bois et/ou de matériaux ligneux, en particulier en matériau en panneau de particules, avec une feuille de décoration (14), en une passe opératoire unique effectué en un passage machine, la feuille de décoration (14) étant collée sur au moins l'un des côtés larges (2) et sur au moins un côté étroit (3), situé dans la direction de passage, des pièces d'oeuvre (1), en utilisant au moins deux adhésifs, et une colle fusible étant utilisée pour le collage entre les côtés étroits de pièces d'oeuvre (3) et la feuille de décoration (14),
**caractérisé en ce que** la colle fusible est appliquée, avant l'arrivée de la feuille de décoration (14) sur les pièces d'oeuvre (1), soit sur la surface, à coller avec les côtés étroits de pièce d'oeuvre (3), de la feuille de décoration (14), soit sur les côtés étroits de pièce d'oeuvre (3) à coller avec la feuille de décoration (14), et une colle à deux composants (13) étant utilisée pour le collage de la feuille de décoration (14) avec les côtés larges (2), et **en ce que**, également, les deux composants de cet adhésif sont appliqués, avec l'arrivée de la feuille de décoration (14) sur les pièces d'oeuvre (2), soit sur la surface, à coller avec les côtés larges de pièce d'oeuvre (2), de la feuille de décoration (14), soit sur les côtés larges de pièce d'oeuvre (2) à coller à la feuille de décoration, à la suite de quoi, dans le même passage, la feuille de décoration, dans sa totalité, est amenée sur les côtés larges de pièce d'oeuvre (2), ainsi que sur les côtés étroits de pièce d'oeuvre (3), et y est pressée.

2. Procédé selon la revendication 1,
**caractérisé en ce que**,
en premier, le composant durcisseur et, ensuite, le composant résineux de la colle à deux composants est appliqué sur l'une des deux surfaces, à coller ensemble, de la feuille de décoration et sur les côtés larges de pièce d'oeuvre.

3. Procédé selon la revendication 2,
**caractérisé en ce que**
les composants de la colle à deux composants sont appliqués sur les côtés larges de pièce d'oeuvre.

4. Procédé selon l'une des revendications 1 à 3,
**caractérisé en ce qu'**
une colle à base d'urée est utilisée comme colle à deux composants.

5. Procédé selon la revendication 3 ou 4,
**caractérisé en ce que**
les pièces d'oeuvre sont chauffées après l'application du composant durcisseur et avant l'application du composant résineux.

6. Procédé selon l'une revendications 1 à 5,
**caractérisé en ce que**
la colle fusible est appliquée à chaud sur au moins une des deux zones de bordure, s'étendant dans la direction de passage, de la feuille de décoration.

7. Procédé selon l'une revendications 3 à 6,
**caractérisé en ce que**
la feuille de décoration est pressée, par sa zone non revêtue, à côté de la zone de bordure revêtue, avec une pression de pressage sur les côtés larges de pièce d'oeuvre, la zone de bordure revêtue de la feuille de décoration étant laissée encore à l'écart des côtés étroits de pièce d'oeuvre concernés.

8. Procédé selon la revendication 7,
**caractérisé en ce que**,
en une dernière étape, la zone de bordure revêtue de la feuille de décoration est amenée aux côtés étroits de pièce d'oeuvre concernés.

9. Procédé selon la revendication 8,
**caractérisé en ce que**
l'adhésif, appliqué sur la zone de bordure de la feuille de décoration, directement avant le pressage de cette zone de bordure sur les côtés étroits de pièce d'oeuvre, est activé par effet de la chaleur.
